# EUROPÄISCHE PATENTSCHRIFT

(11) **EP 2 673 112 B1**
(45) Veröffentlichungstag und Bekanntmachung des Hinweises auf die Patenterteilung: **20.06.2018**
(21) Anmeldenummer: 12724544.7
(22) Anmeldetag: 08.02.2012
(51) Int. Cl.: B23P 9/02, B24B 39/00, B24B 39/02, C21D 7/04

(54) **FLUIDOSTATISCHE WALZVORRICHTUNG ZUR OBERFLÄCHENBEARBEITUNG UND VERFAHREN ZUR RANDSCHICHTUMFORMUNG**
FLUIDOSTATIC ROLLING DEVICE FOR SURFACE PROCESSING AND METHOD FOR FORMING THE SURFACE LAYER
DISPOSITIF DE LAMINAGE À FLUIDE POUR L'USINAGE DE SURFACES ET PROCÉDÉ DE FORMAGE D'UNE COUCHE SUPERFICIELLE

(30) Priorität: 11.02.2011 DE 102011011276
(43) Veröffentlichungstag der Anmeldung: 18.12.2013
(73) Patentinhaber: Ecoroll AG, Werkzeugtechnik, 29227 Celle (DE)
(72) Erfinder: OSTERTAG, Alfred, 29229 Celle (DE)
(74) Vertreter: Plöger, Jan Manfred
(86) Internationale Anmeldenummer: PCT/DE2012/000143
(87) Internationale Veröffentlichungsnummer: WO 2012/107028

(56) Entgegenhaltungen:
- EP-A1- 0 353 376
- DE-A1- 10 157 677
- US-A- 2 575 938
- US-A- 3 911 707

## Beschreibung

Die Erfindung betrifft eine fluidostatische Walzvorrichtung zur Oberflächenbearbeitung, insbesondere zum Glattwalzen und/oder Festwalzen, mit (a) zumindest einem Wälzkörper, (b) zumindest einer fluidostatischen Lagerung, mittels der der zumindest eine Wälzkörper gelagert ist, und (c) zumindest einer Druckfluidversorgung, die ausgebildet ist zum Zuleiten eines Druckfluids zur Lagerung, wobei (d) die Lagerung so ausgebildet ist, dass der Wälzkörper mittels des Druckfluids gegen eine zu bearbeitende Werkstückoberfläche pressbar ist.
Gemäß einem zweiten Aspekt betrifft die Erfindung ein Verfahren zur Randschichtumformung mit den Schritten (i) Beaufschlagen eines Wälzkörpers eines Walzwerkzeugs mit einem Druckfluid, (ii) in Kontaktbringen des Wälzkörpers mit einer Werkstückoberfläche eines Werkstücks, so dass der Wälzkörper eine Kraft auf die Oberfläche ausübt, und (iii) Bewegen des Wälzkörpers relativ zum Werkstück.
Hydrostatische Walzvorrichtungen werden zur Randschichtumformung von Werkstücken, insbesondere von metallischen Werkstücken, benutzt. Sie umfassen ein Walzwerkzeug, das mit einem oder mehreren Wälzkörpern ausgestattet ist, die mit hoher Kraft gegen die Werkstückoberfläche gedrückt werden, während das Werkzeug und das Werkstück sich relativ zueinander bewegen, beispielsweise rotieren. Die Walzkraft wird durch ein Druckfluid hinter den Wälzkörpern erzeugt.

Damit der Wälzkörper nicht innerhalb kürzester Zeit durch Abrasivverschleiß zerstört wird, muss Schmiermittel zugeführt werden. Als Druckfluid wird daher meist ein Öl verwendet, das doppelte Funktion hat, nämlich einerseits den hydrostatischen Druck auf den Wälzkörper aufzubringen und andererseits den Wälzkörper bezüglich seiner Lagerung zu schmieren.

Nachteilig an bekannten Walzvorrichtungen ist, dass die erreichbare Bearbeitungsgeschwindigkeit bei Freiformflächen oder nicht zylinderförmigen Werkstücken durch die Hysterese der Wälzkörperbewegung begrenzt ist. Die Bearbeitung erfolgt nämlich nur in Ausnahmefällen entlang einer Vorschubachse der eingesetzten Werkzeugmaschine. Daher muss bei der Bewegung des Walzwerkzeugs der Walzvorrichtung entlang der zu bearbeitenden Kontur das Walzwerkzeug nachgeführt werden. Das Nachführen erfolgt in diskreten Schritten, so dass der Überstand, um den der Wälzkörper über seine Lagerung vorsteht, sich mit jedem Schritt und zusätzlich mit jeder Abstandsänderung zum Werkstück ändert. Je schneller sich der Überstand ändert, desto stärker dämpft das Druckfluid, beispielsweise das Hydrauliköl, die Bewegung des Wälzkörpers. Das begrenzt die maximal erreichbare Bearbeitungsgeschwindigkeit.

Aus der US 3,911,707 ist ein Festklopfwerkzeug bekannt, bei dem ein rotierender Druckluftstrahl Kugeln in kurzen Abständen gegen die U-Fläche des zu bearbeitenden Werkzeugs schlägt. Das Werkzeug ist gut zum Befestigen der Randschicht von Werkstücken geeignet, nicht jedoch zum Erzeugen höchster Oberflächengüten, da die wiederholten Schläge der Kugeln zu einer relativ hohen langwelligen Oberflächenrauhigkeit führen.

Aus der US 2,575,938 ist ein Werkzeug zum Aufweiten von Zylinderinnenflächen bekannt, das sowohl mit Druckluft als auch mit Öl betrieben werden kann. Nachteilig an diesem Werkzeug ist, dass der Druckluftverbrauch sehr hoch ist und mit der Zeit schnell stark zunimmt. Das Werkzeug ist zudem nicht für die Oberflächenbehandlung von anderen Flächen außer Zylinderinnenflächen geeignet.

Aus der DE 101 57 677 A1 ist ein Festwalzgerät zum Festwalzen von Einstichen an den Lagerstellen von Kurbelwellen bekannt, bei dem die Festwalzrolle über eine Führungsrolle gegen die Kurbelwelle gedrückt wird. Ein Gemisch von Luft und Schmierstoff wird von der Seite des Walzkörpers zugeführt, um die Verbindung zwischen Festwalzrolle und Kurbelwelle sowie Festwalzrolle und Führungsrolle zu schmieren.

Der Erfindung liegt die Aufgabe zugrunde, höhere Bearbeitungsgeschwindigkeiten zu ermöglichen.

Die Erfindung löst das Problem durch eine gattungsgemäße hydrostatische Walzvorrichtung, bei dem das Druckfluid ein schmierpartikelheltiges, unter Druck stehendes Gas ist. Die Erfindung löst das Problem zudem durch eine Werkzeugmaschine mit einer derartigen Walzvorrichtung.

Gemäß einem zweiten Aspekt löst die Erfindung das Problem durch ein gattungsgemäßes Verfahren, bei dem als Druckfluid ein unter Druck stehendes Gas eingesetzt wird.

Der Erfindung liegt die Erkenntnis zugrunde, dass der Wälzkörper auch durch ein Gas hydrostatisch gelagert werden kann. Das ist deshalb überraschend, weil sich die Viskosität von Gasen mit der Temperatur steigt, bei Flüssigkeiten aber sinkt. Mit zunehmendem Druck steigt in der Regel die Viskosität bei Gasen, wohingegen sie bei Flüssigkeiten annähernd unverändert bleibt. Entspannt man ein unter hohem Druck stehendes Gas, so sinkt seine Viskosität sehr stark ab. Da eine hohe Viskosität aber Voraussetzung für eine sichere hydrostatische Lagerung ist, wäre zu erwarten gewesen, dass Gas nicht geeignet ist.

Es ist ein Vorteil der Erfindung, dass durch die geringe Viskosität von Gasen deutlich höhere Bearbeitungsgeschwindigkeiten möglich sind.

Zudem ist vorteilhaft, dass der Aufwand für die Beschaffung und Entsorgung von Kühlschmierstoff entbehrlich ist.

Ein weiterer Vorteil ist, dass die durch das Walzen bedingten Veränderungen der Randzoneneigenschaften für manche Werkstoffe, wie beispielsweise bestimmte Stähle, länger erhalten bleiben. Der Hintergrund dafür ist, dass die Temperatur und der Druck des schmierpartikelhaltigen Gases so gewählt werden können, dass sich das schmierpartikelhaltige Gas beim Expandieren nahe des Walzkörpers abkühlt. Es kommt dann in der Werkstückrandzone zu einer Kaltformung, die die Werkstoffoberfläche besonders nachhaltig verbessert.

Im Rahmen der vorliegenden Beschreibung wird unter dem Wälzkörper insbesondere ein Körper verstanden, der wie die Lagerung Teil eines Walzwerkzeugs ist, das seinerseits Teil der Walzvorrichtung ist und von der Druckfluidversorgung mit Druckfluid beaufschlagbar ist. Insbesondere ist der Wälzkörper so ausgebildet und angeordnet, dass er beim Bewegen des Walzwerkzeuges entlang der Werkstückoberfläche rotiert und so auf die Werkstückrandzone einwirkt. Insbesondere handelt es sich bei dem Wälzkörper um eine Kugel.

Unter der fluidostatischen Lagerung wird insbesondere eine Vorrichtung verstanden, mittels der die Position des Wälzkörpers relativ zum Rest des Walzwerkzeugs gleich gehalten wird. Unter dem Merkmal, dass es sich um eine fluidostatische Führung handelt, wird insbesondere verstanden, dass der Wälzkörper bei Betrieb auf einem Gaskissen aus dem Druckgas gehalten wird, so dass insbesondere keine Festkörperreibung des Wälzkörpers mit der Lagerung oder einer sonstigen Komponente des Walzwerkzeugs besteht.

Bei dem Gas handelt es sich beispielsweise um Luft, Stickstoff, Kohlendioxid oder Mischungen daraus. Grundsätzlich sind allerdings alle Gase einsetzbar. Vorteilhaft ist, wenn die Inversionstemperatur des Gases über 0°C liegt. Unter einem Gas wird dabei insbesondere ein Stoff verstanden, der bei Raumtemperatur von 22°C und Normaldruck von 1013 hPa gasförmig ist. Insbesondere wird unter dem Gas ein Stoff verstanden, der bei Raumtemperatur auch bei 200 bar (20 MPa) gasförmig ist.

Es ist möglich, dass die Walzvorrichtung mehrere Walzwerkzeuge umfasst. Es ist unabhängig davon möglich, dass das Walzwerkzeug bzw. die Walzwerkzeuge jeweils einen, zwei, drei oder mehrere Wälzkörper, aufweist bzw. aufweisen.

Wenn das Walzwerkzeug mehrere Wälzkörper besitzt, können diese in entlang einer Gerade oder einer Kurve, insbesondere eines Kreises, angeordnet sein. Es ist auch möglich, dass die Wälzkörper entlang einer Ebene oder entlang einer gekrümmten Fläche, insbesondere einer Zylinderfläche oder einer fassartigen Fläche angeordnet sind.

Erfindungsgemäß ist das Druckfluid ein unter Druck stehendes schmierpartikelhaltiges Gas. Es ist dann ein Vorteil, dass der Verbrauch an Kühlschmierstoff deutlich reduziert werden kann.

Vorteilhaft ist, dass die Konzentration an Schmierpartikeln im Gas so gering gewählt werden kann, dass lediglich ein dünner Film an Schmierpartikeln, beispielsweise an Öl, auf dem Werkstück zurückbleibt, der nicht mehr entfernt werden muss. Da bei bekannten fluidostatischen Walzvorrichtungen das Druckfluid gleichzeitig der Schmierung dient und somit ein gegenüber der Erfindung deutlich erhöhter Durchsatz an Schmiermittel notwendig ist, ist es überraschend, dass eine geringe Menge an Schmierstoffpartikeln ausreichend ist.

Gemäß einer bevorzugten Ausführungsform ist das schmierpartikelhaltige Gas ein Schmiermittelnebel. Zwar ist auch denkbar, dass das schmierpartikelhaltige Gas ein Rauch ist, also Feststoffpartikel enthält, besonders günstig ist es aber, wenn das schmierpartikelhaltige Gas ein Aerosol aus Gas und Schmierstofftröpfchen ist. Vorzugsweise haben über 90 % der Schmierstofftröpfchen im Schmierstoffnebel eine Tröpfchengröße von höchstens 10 Mikrometern, insbesondere von höchstens 1 Mikrometer.

Gemäß einer bevorzugten Ausführungsform ist die Druckfluidversorgung eingerichtet zum Abgeben eines Druckfluids, die pro Betriebsstunde höchstens 50 Milliliter an Schmiermittel abgibt. Es handelt sich dann um ein minimal-mengengeschmiertes Walzwerkzeug.

Gemäß einer bevorzugten Ausführungsform ist die Druckfluidversorgung ausgebildet zum Abgeben eines Schmiermittelnebels, der Schmiermitteltröpfchen aus einem ölfreien Schmiermittel enthält. Selbstverständlich ist es aber auch möglich, dass der Schmiermittelnebel Schmiermitteltropfen aus einem Öl enthält, also ein Öl-Aerosol ist, oder sowohl ölfreie als auch ölhaltige Komponenten enthält.

Vorzugsweise ist die Lagerung so ausgebildet, dass der zumindest eine Wälzkörper mit einer zeitlich gleichförmigen Kraft gegen eine zu bearbeitende Werkstückoberfläche pressbar ist. Das ist zum Glattwalzen besonders vorteilhaft. Es sind Oberflächenbearbeitungswerkzeuge bekannt, bei denen per Druckluft Schlag-Kugeln auf einer Kreisbahn gehalten werden, wobei die Schlagkugeln in regelmäßigen Abständen an Kontaktkugeln schlagen, die an der Werkstückoberfläche anliegen. Es ergibt sich so eine Verfestigung der Werkstückrandzone, die aber insbesondere bei einem Glattwalzen unerwünscht ist. Unter dem Merkmal, dass die Kraft zeitlich gleichförmig ist, wird insbesondere verstanden, dass die Kraft, die der Walzkörper auf die Werkstückoberfläche ausübt, wenn das Werkzeug mit dem Werkstück in Eingriff ist, das Werkzeug aber nicht bewegt wird, im Wesentlichen nicht schwankt, also insbesondere um weniger als 20% schwankt.

Selbstverständlich ist es möglich, auch mit einer solchen Walzvorrichtung eine zeitlich veränderliche Kraft aufzubringen, beispielsweise in Form einer zeitlich rampenartig zunehmenden oder abnehmenden Kraft. Vorteilhaft ist aber, dass auch eine konstante Kraft aufbringbar ist.

Vorzugsweise ist die Lagerung so ausgebildet, dass der zumindest eine Wälzkörper während der Bearbeitung eine Kraft auf das Werkstück aufbringt, die mit einer Grundfrequenz von höchstens 1 Hertz schwankt.

Vorzugsweise ist die Druckfluidversorgung ausgebildet zum Abgeben eines unter einem Arbeitsdruck stehenden Druckfluids, wobei der Arbeitsdruck zumindest 20 bar (2 MPa), insbesondere zumindest 50 bar (5 MPa), beträgt. Es hat sich gezeigt, dass bei einem Arbeitsdruck von zumindest 20 bar die Schmierung des Wälzkörpers sicher gewährleistet ist. Das ist nach jetziger Erkenntnislage darauf zurückzuführen, dass das unter Druck stehende Gas in der Nähe des Wälzkörpers expandiert, sich dabei abkühlt und sich dadurch die Viskosität der Schmierstofftröpfchen erhöht. Der Schmierstoff haftet aber besser am Wälzkörper und so ist trotz der geringen Schmiermittelkonzentration im Druckfluid eine sichere Schmierung des Wälzkörpers gewährleistet.

Die Schmierstoffpartikel, insbesondere die Schmierstofftröpfchen, erfahren zudem dann ihre Abkühlung, wenn sie sich zwischen der Lagerung und dem Wälzkörper befinden. Dort ist nämlich die Strömungsgeschwindigkeit am höchsten und nach dem Gesetz von Bernoulli der Druck besonders gering und damit die Temperatur niedrig. Dadurch, dass die Schmierstofftröpfchen im Spalt zwischen der Lagerung und dem Wälzkörper eine hohe Viskosität haben, behindern sie das Durchströmen des Gases und vermindern so den Verbrauch an Druckfluid bzw. Schmierstoffnebel.

Durch den hohen Arbeitsdruck wird zudem auf der Oberfläche des Werkstücks haftender Schmierstoff weggeblasen, so dass das Werkstück in der Regel nach der Bearbeitung nicht mehr gereinigt werden muss.

Vorzugsweise besitzt die Lagerung einen Wälzkörpersitz, mittels dem der Wälzkörper gefangen ist. Das heißt, dass der Wälzkörper vom Druckfluid nicht aus dem Walzwerkzeug herausgedrückt werden kann, da er vom Wälzkörpersitz zurückgehalten wird. Es ist aber auch denkbar, dass beispielsweise bei der Bearbeitung von Bohrungen die Lagerung eine Bewegung des Wälzkörpers nach radial außen nicht unterdrückt. In diesem Fall besitzt das Walzwerkzeug vorzugsweise eine Hülse, die ein Austreten des Wälzkörpers verhindert, wenn ein Austreten des Wälzkörpers nicht durch eine gegenüberliegende Werkstückoberfläche verhindert wird.

Vorzugsweise besitzt die fluidostatische Lagerung einen Wälzkörpersitz, wobei der Wälzkörpersitz so ausgebildet ist, dass er vom Wälzkörper zumindest im Wesentlichen fluiddicht verschließbar ist, so dass im Wesentlichen kein Druckfluid entweicht, wenn der Wälzkörper nicht mit dem Werkstück im Eingriff steht. Hieran ist vorteilhaft, dass nur sehr wenig Druckfluid verbraucht wird, wenn das Wälzwerkzeug nicht mit einem Werkstück in Kontakt ist. Insbesondere beträgt der Leckstrom höchstens ein Zehntel des Maximal möglichen Druckfluidstroms.

Vorzugsweise ist der Wälzkörpersitz so ausgebildet, dass sich ein Druckfluidkissen zwischen dem Wälzkörpersitz und dem Wälzkörper ausbildet, wenn der Wälzkörper gegen ein Werkstück gedrückt wird.

Günstig ist es, wenn das Walzwerkzeug eine Temperatursteuerung und/oder Regelung zum Steuern und/oder Regeln einer Gastemperatur des schmierpartikelhaltigen Gases aufweist. Wie oben erwähnt, spielt im bevorzugten erfindungsgemäßen Verfahren die durch die Expansion hervorgerufene Abkühlung des Gases eine Rolle. Bei gleichbleibendem Druck kann durch das Einstellen der Temperatur des Gases die Temperatur am Wälzkörper eingestellt werden, so dass die Bedingungen, unter denen gewalzt wird, definierbar sind. Selbstverständlich kann die Gastemperatur des schmierpartikelhaltigen Gases vor, aber auch nach dem Einbringen der Schmierstoffpartikel, insbesondere der Schmierflüssigkeitspartikel, realisiert werden.

Vorzugsweise umfasst die Druckfluidversorgung einen Kompressor zum Verdichten von Luft. In diesem Fall ist es günstig, wenn abströmseitig hinter dem Kompressor eine Temperatursteuerung vorgesehen ist, die insbesondere einen Wärmetauscher umfassen kann. Mittels des Wärmetauschers kann die durch das Komprimieren entstehende Wärme abgeführt werden.

Ein erfindungsgemäßes Verfahren wird insbesondere so durchgeführt, dass der Wälzkörper so mit Druckfluid beaufschlagt wird, dass es den Wälzkörper umströmt, Schmierpartikel, insbesondere Schmierflüssigkeitströpfchen, den Wälzkörper schmieren und eine Expansion des Druckfluids beim Austreten aus dem Walzwerkzeug zu einer Temperatursenkung des Druckfluids von mehr als 10 Kelvin, insbesondere von mehr als 20 Kelvin, führt. Wie oben ausgeführt, steigt dadurch die Viskosität von Schmierflüssigkeitströpfchen. Je höher der Arbeitsdruck des Druckfluids ist, desto größer ist in der Regel die Temperaturabsenkung. Beispielsweise kann es vorteilhaft sein, wenn der Arbeitsdruck zumindest 150 bar beträgt, da es dann zu einem Temperaturabfall von mehr als 30 Kelvin kommen kann.

Insbesondere werden die Gastemperaturen und/oder der Fluiddruck des schmierpartikelhaltigen Gases so gewählt, dass die Temperatur des Druckfluids nach dem Austreten aus dem Walzkörper, also in Nähe der Werkstückoberfläche, unter 20°C, bevorzugt unter 10°C, insbesondere unter 5°C liegt.

Günstig ist es daher, wenn das Verfahren ein Einstellen der Gastemperatur des schmierpartikelhaltigen Gases auf eine Gastemperatur umfasst, die kleiner ist als 50°, insbesondere kleiner als 40°.

Gemäß einer bevorzugten Ausführungsform ist das Druckfluid ein Schmiermittelnebel, der Schmierflüssigkeitströpfchen aus einer Schmierflüssigkeit umfasst, wobei die Schmierflüssigkeit eine temperaturabhängige Viskosität hat. Vorzugsweise wird der Wälzkörper mit Schmiermittelnebel mit einem solchen Arbeitsdruck beaufschlagt, dass die Viskosität des Schmiermittels aufgrund der Temperaturabsenkung beim Expandieren des Schmiermittelnebel im Bereich des Wälzkörpers um zumindest um das Doppelte zunimmt.

Das Verfahren eignet sich zum Bearbeiten von Freiformflächen, von zumindest abschnittsweise rotationssymmetrischen Werkstücken, von Löchern, insbesondere zylindrischen und nicht-zylindrischen Bohrungen sowie in Kombination mit anderen Werkzeugen, insbesondere spanenden Werkzeugen. Erfindungsgemäß ist daher auch beispielsweise ein kombiniertes Schäl-Walzwerkzeug, das neben den oben genannten Merkmalen für ein fluidostatisches Walzwerkzeug ein spanendes Werkzeug, insbesondere zumindest eine geometrisch bestimmte Schneide aufweist.

Vorzugsweise wird das Verfahren so durchgeführt, dass das Druckfluid beim Austreten aus dem Walzwerkzeug eine Temperatur von weniger als 15°C, insbesondere von weniger als 10°C, hat. Dadurch können Werkstücke aus zur Kaltverfestigung neigenden Werkstoffen beim Walzen besonders stark verfestigt werden.

Im Folgenden wird die Erfindung anhand der beigefügten Zeichnungen näher erläutert. Dabei zeigt
- Figur 1: einen Querschnitt durch ein Walzwerkzeug einer erfindungsgemäßen Walzvorrichtung auf Höhe der Wälzkörper,
- Figur 2: eine perspektivische Ansicht einer erfindungsgemäßen Walzvorrichtung,
- Figur 3: eine zweite Ausführungsform einer Walzvorrichtung,
- Figur 4: eine dritte Ausführungsform einer Walzvorrichtung,
- Figur 5: eine vierte Ausführungsform einer erfindungsgemäßen Walzvorrichtung,
- Figur 6: eine Detailzeichnung der thermodynamischen Verhältnisse am Wälzkörper und
- Figur 7: einen Querschnitt durch eine erfindungsgemäßen Walzvorrichtung.

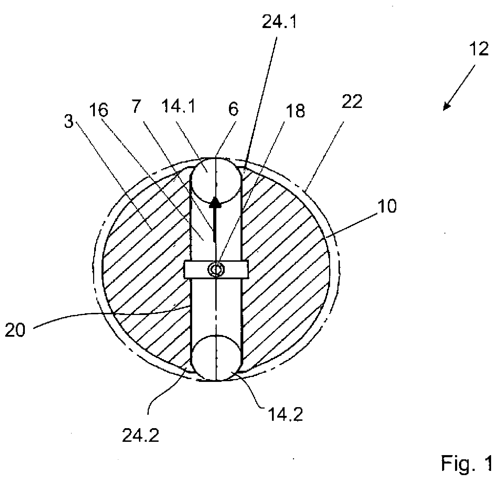

Figur 1 zeigt einen Querschnitt durch einen Kopf 10 eines erfindungsgemäßen Walzwerkzeugs 12. Das Walzwerkzeug 12 besitzt einen Wälzkörper 14.1 und einen zweiten Wälzkörper 14.2, die mittels einer Lagerung 16 hier in Form einer Bohrung, gelagert sind. Die Wälzkörper 14 (Bezugszeichen ohne Zählsuffix bezeichnen das Objekt als solches) besitzen einen Durchmesser, der um einen kleinen Betrag kleiner ist als ein Durchmesser der Bohrung 16, so dass sie in der Bohrung 16 verschieblich und drehbar aufgenommen sind.

Über einen Kanal 18 wird ein unter Druck stehendes Gas 20 zugeführt, so dass die Wälzkörper 14 radial nach außen gegen eine zu bearbeitende Werkstückoberfläche 22 gedrückt werden. Die Wälzkörper 14 üben dann eine Kraft auf die Werkstückoberfläche 22 aus und verformen sie. Optional kann die Lagerung, wie in der vorliegenden Ausführungsform vorgesehen, Rückhaltestrukturen 24.1, 24.2 aufweisen, mittels denen verhindert wird, dass die Wälzkörper 14 das Walzwerkzeug 12 verlassen können. Die Rückhaltestrukturen verhindern zudem weitgehend ein Austreten von Gas 20, wenn der Wälzkörper 14 nicht mit einem Werkstück in Kontakt ist. Sobald der Wälzkörper 14 von einer Werkstückoberfläche ausgelenkt wird, öffnet sich ein Spalt und es bildet sich ein Luftkissen, das den Wälzkörper 14 führt.

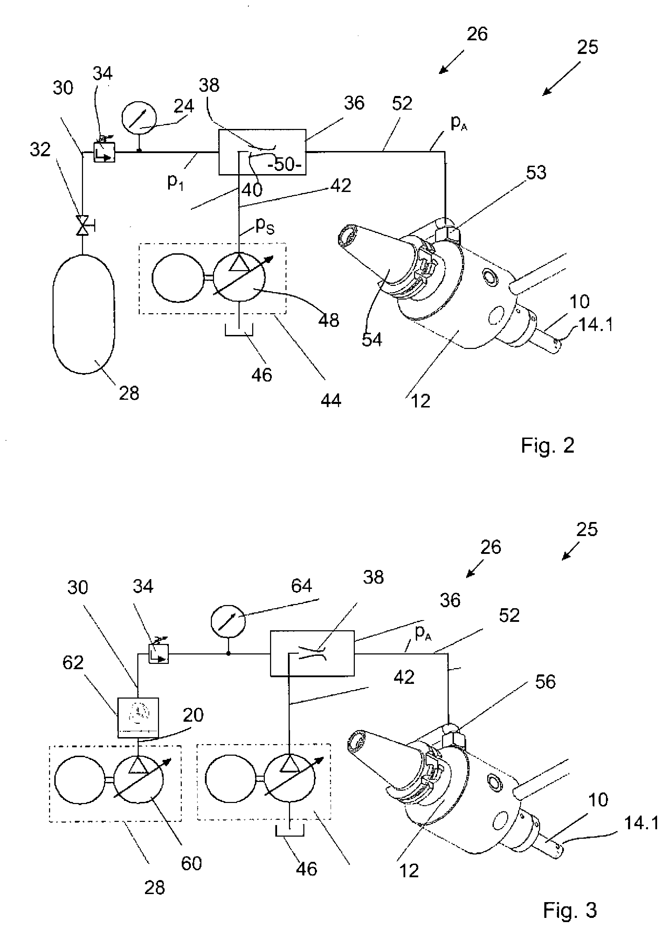

Figur 2 zeigt eine schematische Ansicht einer erfindungsgemäßen Walzvorrichtung 25 mit dem Walzwerkzeug 12 und einer Druckfluidversorgung 26. Die Druckfluidversorgung 26 umfasst eine Druckgasquelle 28, aus der Gas 20 durch eine Druckleitung 30 entnehmbar ist. Über ein Ventil 32 ist der Gasstrom unterbrechbar, so dass beispielsweise die Druckgasquelle 28 gewechselt werden kann. Über einen Druckregler 34 wird ein Fluiddruck p₁ eingestellt, mit dem das Druckfluidgas 20 in eine Vernebelungskammer 36 geleitet wird.

In der Vernebelungskammer 36 ist eine Düse 38 angeordnet, die Schmierflüssigkeit 40 vernebelt, die mit einem Schmierflüssigkeitsdruck p_{S} von einer Schmierflüssigkeitsleitung 42 bereitgestellt wird. Die Schmierflüssigkeitsleitung 42 wird von einer Schmiermittel-Dosiereinheit 44 beschickt, die einen Schmiermitteltank 46 für flüssiges Schmiermittel und eine Schmiermittelpumpe 48 umfasst. Der Schmierflüssigkeitsdruck p_{S} ist meist höher als der Fluiddruck p₁. In der Vernebelungskammer 36 bildet sich ein Schmiermittelnebel 50, der über eine Druckleitung 52 mit einem Arbeitsdruck p_{A} zum Walzwerkzeug 12 geleitet wird, an dem der Kopf 10 ausgebildet ist.

Die Komponenten von der Druckgasquelle 28 bis einschließlich der Druckleitung 52 und einem Druckanschluss 56 sind Teil der Druckfluidversorgung 26. Das Werkzeug 12 besitzt einen Werkzeugschaft 54, über den eine Drehbewegung einer Spindel einleitbar ist. Über eine Verdrehsicherung 58 wird ein Mitdrehen des Gehäuses verhindert, so dass sich nur der Kopf 10 dreht.

Ein erfindungsgemäßes Verfahren wird dadurch durchgeführt, dass zunächst die Walzkörper 14 des Walzwerkzeugs 12 mit insbesondere schmierpartikelhaltigem Gas aus der Druckfluidversorgung 26 beaufschlagt werden. Danach oder davor werden die Walzkörper 14 mit einer in Figur 2 nicht eingezeichneten Werkstückoberfläche eines Werkstücks in Kontakt gebracht, so dass der Wälzkörper 14 eine Kraft auf die Werkstoffoberfläche ausüben. Das Walzwerkzeug 12 wird dann relativ zum Werkstück bewegt, im vorliegenden Fall bei drehendem Kopf entlang einer Bohrung, so dass der Walzkörper bzw. die Walzkörper die Randzone des Werkstücks beeinflussen.

Zur Bereitstellung von schmierpartikelhaltigem Gas für das Walzwerkzeug 12 wird Gas 20 aus der Druckgasflasche 28 entnommen, mittels des Druckreglers 34 auf einen vorangestellten Druck p₁ gebracht und zur Vernebelungskammer 36 geleitet, wo beispielsweise mittels einer Venturi-Düse die Schmierflüssigkeit 40 vernebelt wird. Das so entstehende, unter einem Arbeitsdruck p_{A} stehende schmierpartikelhaltige Gas wird dann zum Walzwerkzeug 12 geleitet.

Die Schmiermittelpumpe 48 wird von einer nicht eingezeichneten Steuerung so angetrieben, dass der Gehalt an Schmierpartikeln im schmierpartikelhaltigen Gas, das durch die Druckleitung 52 abgegeben wird, konstant ist.

Figur 3 zeigt eine alternative Ausführungsform einer Druckfluidversorgung 26 einer erfindungsgemäßen Walzvorrichtung 25, bei der die Druckgasquelle 28 einen Kompressor 60 umfasst, der Umgebungsluft ansaugt und komprimiert. Das so erzeugte Druckgas 20 gelangt zu einer Temperatursteuerung 62, die einen Wärmetauscher umfasst und das Druckgas 20 auf eine vorgegebene Gastemperatur T_{G} steuert bzw. regelt. Es ist möglich, dass abströmseitig hinter dem Druckregler 34 ein Manometer 64 angeordnet ist, um den Druck zu kontrollieren. Sowohl der Druckregler 34 als auch das Manometer sind jedoch nicht notwendig, wenn beispielsweise der Kompressor 60 entsprechend ausgebildet ist.

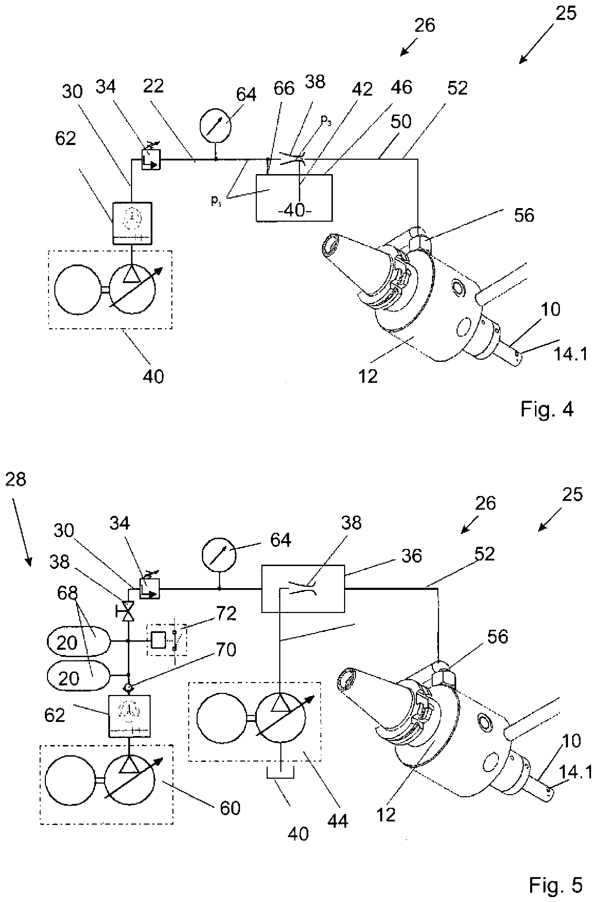

Figur 4 zeigt eine weitere Ausführungsform einer Druckfluidversorgung 26, bei der der Schmiermitteltank 46 unter dem Fluiddruck p₁ steht, indem eine Stichleitung 66 für den entsprechenden Druckausgleich sorgt. Die Düse 38 ist als Venturi-Düse ausgebildet und die Schmierflüssigkeitsleitung 42 mündet in einer Stelle hoher Strömungsgeschwindigkeit und damit geringen Druckes in die Düse 38. Dadurch wird Schmierflüssigkeit 40 aus dem Schmierflüssigkeitstank 42 angesaugt und vernebelt, so dass der Schmiermittelnebel 50 entsteht, der durch die Druckleitung 52 zum Walzwerkzeug 12 geleitet wird.

Figur 5 zeigt eine weitere Ausführungsform der Druckfluidversorgung 26 für eine erfindungsgemäße Walzvorrichtung 58, bei der die Druckgasquelle 28 Druckgasflaschen 68 umfasst, die vom Kompressor 60 bei Bedarf befüllt werden. Über ein Rückschlagventil 70 ist sichergestellt, dass Druckgas 20 die Druckgasflaschen 68 nicht in Richtung Kompressor 60 verlässt. Über einen Druckschalter 72 wird der Kompressor 60 aktiviert, wenn ein Druck in den Druckgasflaschen 68 einen vorgegebenen Schwellenwert unterschreitet.

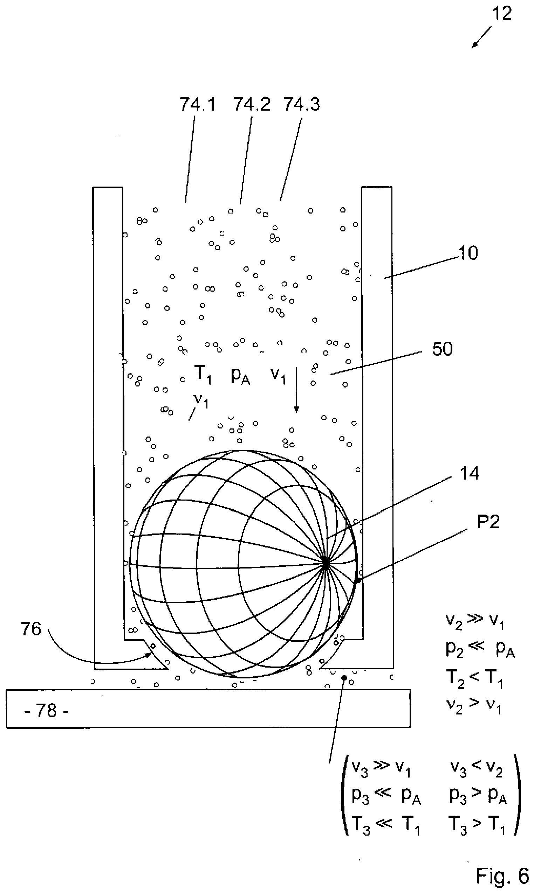

Figur 6 zeigt schematisch die Situation im Werkzeug 12 beim Betrieb. Das schmierpartikelhaltige Gas in Form des Schmiermittelnebels 50 strömt mit einer Strömungsgeschwindigkeit v₁, dem Arbeitsdruck p_{A} und der Temperatur T₁ zum Wälzkörper 14. Die Schmiermitteltröpfchen 74.1, 74.2, 74.3, ... bestehen aus Schmierstoff mit einer Viskosität v₁.

An einem Punkt P2, beispielsweise am Ort des geringsten Abstands zwischen Wälzkörpers 14 und Lagerung 16, erhöht sich die Strömungsgeschwindigkeit auf den Wert v₂, der Druck sinkt auf den Wert p₂ und daraus resultierend sinkt die Temperatur auf den Wert T₂. Die Viskosität v der Schmiermitteltröpfchen steigt wegen der geringeren Temperatur auf den Wert v₂. Durch die verringerte Viskosität haften einige der Schmiermitteltröpfchen am Wälzkörper 14 und schmieren ihn, beispielsweise, wenn der Wälzkörper 14 außer Eingriff oder erneut in Eingriff mit dem 78 kommt.

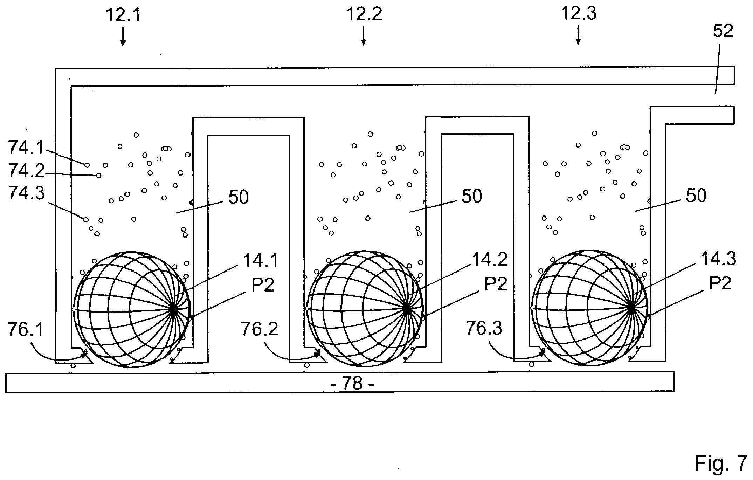

Figur 7 zeigt eine erfindungsgemäße Walzvorrichtung 25, die mehrere Walzwerkzeuge 12 umfasst, von denen die Walzwerkzeuge 12.1, 12.2, 12.3 in Figur 7 zu sehen sind. Sind die Walzwerkzeuge 12 ohne Kontakt mit dem Werkstück 78, so liegen die Kugelmittelpunkte der Wälzkörper 14 in einer Fläche, die eine Ebene sein kann. Es ist aber auch möglich, dass die Fläche in einer Dimension oder in zwei Dimensionen gekrümmt ist. Die Walzwerkzeuge 12 sind über eine gemeinsame Druckleitung 52 an die Druckfluidversorgung 58 (siehe Figuren 2 bis 5) angeschlossen.

## Patentansprüche

1. Fluidostatische Walzvorrichtung (25) zur Oberflächenbearbeitung, mit
(a) zumindest einem Wälzkörper (14),
(b) zumindest einer fluidostatischen Lagerung (15), mittels der der Wälzkörper (14) gelagert ist, und
(c) zumindest einer Druckfluidversorgung (26), die ausgebildet ist zum Zuleiten eines Druckfluids zur Lagerung (15),
(d) wobei die Lagerung (15) so ausgebildet ist, dass der Wälzkörper (14) mittels des Druckfluids gegen eine zu bearbeitende Werkstückoberfläche (22) pressbar ist,
**dadurch gekennzeichnet, dass**
(e) das Druckfluid ein schmierpartikelhaltiges, unter Druck stehendes Gas ist.

2. Walzvorrichtung (25) nach Anspruch 1, **dadurch gekennzeichnet, dass**
(a) das Gas schmierpartikelhaltig ist,
(b) wobei das schmierpartikelhaltige Gas ein Schmiermittelnebel (50) ist und
(c) wobei die Druckfluidversorgung ausgebildet zum Abgeben eines Schmiermittelnebels, der
- Schmiermitteltropfen aus einem Öl oder
- sowohl ölfreie als auch ölhaltige Komponenten
enthält.

3. Walzvorrichtung (25) nach einem der vorstehenden Ansprüche, **dadurch gekennzeichnet, dass** die Lagerung (15) so ausgebildet ist, dass der zumindest eine Wälzkörper (14) mit einer zeitlich gleichförmigen Kraft gegen eine zu bearbeitende Werkstückoberfläche (22) pressbar ist.

4. Walzvorrichtung (25) nach einem der vorstehenden Ansprüche, **dadurch gekennzeichnet, dass**
- die Druckfluidversorgung (26) ausgebildet ist zum Abgeben eines unter einem Arbeitsdruck (p_{A}) stehenden Druckfluids,
- wobei der Arbeitsdruck (p_{A}) zumindest 20 bar (2 MPa), insbesondere zumindest 5 MPa, beträgt.

5. Walzvorrichtung (25) nach einem der vorstehenden Ansprüche, **dadurch gekennzeichnet, dass** die Lagerung einen Wälzkörpersitz aufweist, mittels dem der Wälzkörper gefangen ist.

6. Walzvorrichtung (25) nach einem der vorstehenden Ansprüche, **gekennzeichnet durch** eine Temperatursteuerung oder -regelung zum Steuern und/oder Regeln einer Gastemperatur (T_{G}) des Gases, insbesondere des schmierpartikelhaltigen Gases.

7. Walzvorrichtung (25) nach einem der vorstehenden Ansprüche, **dadurch gekennzeichnet, dass** die Walzvorrichtung (25) mehrere Walzwerkzeuge (12) umfasst.

8. Verfahren zur Randschichtumformung mit den Schritten:
(i) Beaufschlagen zumindest eines Wälzkörpers (14) zumindest eines Walzwerkzeugs (12) mit einem Druckfluid,
(ii) Inkontaktbringen des Wälzkörpers (14) mit einer Werkstückoberfläche (22) eines Werkstücks, so dass der Wälzkörper (14) eine Kraft auf die Werkstückoberfläche (22) ausübt, und
(iii) Bewegen des Walzwerkzeugs relativ zum Werkstück,
**dadurch gekennzeichnet, dass**
(iv) als Druckfluid zum hydrostatischen Lagern des Wälzkörpers (14) ein unter Druck stehendes schmierpartikelhaltiges Gas eingesetzt wird.

9. Verfahren nach Anspruch 8, **dadurch gekennzeichnet, dass** das Druckfluid unter einem Arbeitsdruck (p_{A}) von zumindest 20 bar (2 MPa), insbesondere von zumindest 5 MPa, zugeführt wird.

10. Verfahren nach einem der Ansprüche 8 oder 9, **dadurch gekennzeichnet, dass**
- das Druckfluid ein Schmiermittelnebel (50) ist, der Schmierflüssigkeitströpfchen aus einer Schmierflüssigkeit (40) umfasst, die Schmierflüssigkeit (40) eine temperaturabhängige Viskosität hat,
- wobei der Wälzkörper (14) mit Schmiermittelnebel (50) mit einem solchen Arbeitsdruck (p_{A}) beaufschlagt wird, dass die Viskosität des Schmiermittels aufgrund der Temperaturabsenkung beim Expandieren des Schmiermittelnebels (50) im Bereich des Wälzkörpers zumindest um das Doppelte zunimmt.

11. Verfahren nach Anspruch 8 oder 10, **dadurch gekennzeichnet, dass** der Wälzkörper (14) so mit Druckfluid beaufschlagt wird, dass
- es den Wälzkörper (14) umströmt,
- Schmierpartikel den Wälzkörper (14) schmieren und
- eine Expansion des Druckfluids beim Austreten aus dem Walzwerkzeug zu einer Temperaturabsenkung von mehr als 10 Kelvin, insbesondere von mehr als 20 Kelvin, führt.

12. Verfahren nach einem der Ansprüche 8 bis 11, **dadurch gekennzeichnet, dass** das Druckfluid beim Austreten aus dem Walzwerkzeug (12) eine Temperatur von weniger als 15°C, insbesondere von weniger als 10°C, hat.

13. Verfahren nach einem der Ansprüche 8 bis 12, **dadurch gekennzeichnet, dass** das Werkstück zumindest an seiner Werkstückoberfläche (22) aus einem Werkstoff besteht, der bei der Temperatur, mit der das Druckfluid aus dem Walzwerkzeug (12) austritt, unter Kaltverfestigung verformbar ist.

14. Verfahren nach einem der Ansprüche 9 bis 13, **dadurch gekennzeichnet, dass** der Schmiermittelnebel (50)
- aus einem Öl besteht oder
- sowohl ölfreie als auch ölhaltige Komponenten enthalt.

## Claims

1. Fluidostatic rolling device (25) for surface processing with
(a) at least one rolling element (14),
(b) at least one fluidostatic bearing (15), by means of which the rolling element (14) is mounted, and
(c) at least one pressure fluid supply (26),
which is configured to supply the bearing (15) with a pressure fluid,
(d) wherein the bearing (15) is designed such that the rolling element (14) can be pressed, by means of the pressure fluid, against a workpiece surface (22) that is to be processed,
**characterised by** the fact that
(e) the pressure fluid is a pressurised gas that contains lubricating particles.

2. Rolling device (25) according to claim 1, **characterised by** the fact that
(a) the gas contains lubricating particles,
(b) wherein the gas that contains lubricating particles is a lubricating mist (50) and
(c) wherein the pressure fluid supply is designed to emit a lubricating mist that contains
- droplets of oil-based lubricant or
- elements that are both oil-free and contain oil.

3. Rolling device (25) according to one of the above claims, **characterised by** the fact that the bearing (15) is designed such that the at least one rolling element (14) can be pressed against a workpiece surface (22) that is to be processed using a force that is temporally uniform.

4. Rolling device (25) according to one of the above claims, **characterised by** the fact that
- the pressure fluid supply (26) is designed to emit a pressure fluid that is under a working pressure (p_{A}),
- wherein the working pressure (p_{A}) has a value of at least 20 bar (2 MPa), especially at least 5 MPa.

5. Rolling device (25) according to one of the above claims, **characterised by** the fact that the bearing comprises a rolling element seat, by means of which the rolling element is caught.

6. Rolling device (25) according to one of the above claims, **characterised by** a temperature control system or regulation system for controlling and/or regulating a gas temperature (T_{G}) of the gas, in particular of the gas that contains lubricating particles.

7. Rolling device (25) according to one of the above claims, **characterised by** the fact that the rolling device (25) comprises several rolling tools (12).

8. Method for forming the surface layer featuring the steps:
(i) applying a pressure fluid to at least one rolling element (14) of at least one rolling tool (12),
(ii) establishing contact between the rolling element (14) and a workpiece surface (22) of a workpiece such that the rolling element (14) exerts a force on the workpiece surface (22), and
(iii) moving the rolling tool relative to the workpiece,
**characterised by** the fact that
(iv) a pressurised gas that contains lubricating particles is used as a pressure fluid for the hydrostatic storage of the rolling element (14).

9. Method according to claim 8, **characterised by** the fact that the pressure fluid is supplied under a working pressure (p_{A}) of at least 20 bar (2 MPa), especially at least 5 MPa.

10. Method according to one of the claims 8 or 9, **characterised by** the fact that
- the pressure fluid is a lubricating mist (50) that contains droplets of lubricant from a lubricating fluid (40), the lubricating fluid (40) having a temperature-dependent viscosity,
- wherein lubricating mist (50) is applied to the rolling element (14) at a working pressure (p_{A}) such that the viscosity of the lubricant at least doubles due to the decline in temperature that occurs when the lubricating mist (50) expands in the vicinity of the rolling element.

11. Method according to claim 8 or 10, **characterised by** the fact that pressure fluid is applied to the rolling element (14) such that
- it flows around the rolling element (14),
- lubricating particles lubricate the rolling element (14) and
- an expansion of the pressure fluid upon leaving the rolling tool leads to a decline in temperature of more than 10 Kelvins, especially of more than 20 Kelvins.

12. Method according to one of the claims 8 to 11, **characterised by** the fact that the pressure fluid upon leaving the rolling tool has a temperature of less than 15°C, especially of less than 10°C.

13. Method according to one of the claims 8 to 12, **characterised by** the fact that the workpiece is composed - at least on its workpiece surface (22) - of a material that is malleable by way of work hardening at the temperature at which the pressure fluid leaves the rolling tool (12).

14. Method according to one of the claims 8 to 13, **characterised by** the fact that the lubricating mist (50)
- is composed of an oil or
- contains elements that are both oil-free and contain oil.

## Revendications

1. Dispositif de laminage fluidéostatique (25) pour le traitement de surface, comprenant
(a) au moins un corps de laminage (14),
(b) au moins un palier fluidéostatique (15) au moyen duquel le corps de laminage (14) est monté, et
(c) au moins une alimentation en fluide sous pression (26) qui est réalisée pour amener un fluide sous pression au palier (15),
(d) dans lequel le palier (15) est réalisé de telle façon que le corps de laminage (14) est susceptible d'être pressé au moyen du fluide sous pression contre une surface à traiter (22) d'une pièce à oeuvrer,
**caractérisé en ce que**
(e) le fluide sous pression est un gaz sous pression contenant des particules de lubrifiant.

2. Dispositif de laminage (25) selon la revendication 1, **caractérisé en ce que**
(a) le gaz contient des particules de lubrifiant,
(b) dans lequel le gaz contenant des particules de lubrifiant est un brouillard de lubrifiant (50) et
(c) dans lequel l'alimentation en fluide sous pression est réalisée pour distribuer un brouillard de lubrifiant qui contient
- des gouttes de lubrifiant constituées d'huile ou
- à la fois des composants dépourvus d'huile est des composants contenant de l'huile.

3. Dispositif de laminage (25) selon l'une des revendications précédentes, **caractérisé en ce que** le palier (15) est réalisé de telle façon que ledit au moins un corps de laminage (14) est susceptible d'être pressé avec une force régulière sur le plan temporel contre une surface à traiter (22) d'une pièce à oeuvrer.

4. Dispositif de laminage (25) selon l'une des revendications précédentes, **caractérisé en ce que**
- l'alimentation en fluide sous pression (26) est réalisée pour distribuer un fluide sous pression qui se trouve sous une pression de travail (p_{A}),
- dans lequel la pression de travail (p_{A}) s'élève au moins à 20 bars (2 MPa), en particulier au moins 5 MPa.

5. Dispositif de laminage (25) selon l'une des revendications précédentes, **caractérisé en ce que** le palier comprend un siège de corps de laminage au moyen duquel le corps de laminage est captif.

6. Dispositif de laminage (25) selon l'une des revendications précédentes, **caractérisé par** une commande ou une régulation de température pour commander et/ou pour réguler une température (T_{G}) du gaz, en particulier du gaz contenant des particules de lubrifiant.

7. Dispositif de laminage (25) selon l'une des revendications précédentes, **caractérisé en ce que** le dispositif de laminage (25) inclut plusieurs outils de laminage (12).

8. Procédé pour la mise en forme de couches de bordure, comprenant les étapes consistant à :
(i) appliquer un fluide sous pression à au moins un corps de laminage (14) d'au moins un outil de laminage (12),
(ii) amener en contact le corps de laminage (14) avec une surface (22) d'une pièce à oeuvrer, de sorte que le corps de laminage (14) exerce une force sur la surface (22) de la pièce à oeuvrer, et
(iii) déplacer l'outil de laminage par rapport à la pièce à oeuvrer,
**caractérisé en ce que**
(iv) on emploie à titre de fluide sous pression pour le montage hydrostatique du corps de laminage (14) un gaz contenant des particules de lubrifiant qui se trouve sous pression.

9. Procédé selon la revendication 8, **caractérisé en ce que** le fluide sous pression est amené sous une pression de travail (Pa) d'au moins 20 bars (2MPa), en particulier d'au moins 5 MPa.

10. Procédé selon l'une des revendications 8 ou 9, **caractérisé en ce que**
- le fluide sous pression est un brouillard de lubrifiant (50), qui inclut des gouttelettes de liquide lubrifiant formées d'un liquide lubrifiant (40), le liquide lubrifiant (40) présentant une viscosité dépendant de la température,
- dans lequel on applique au corps de laminage (14) au moyen d'un brouillard de lubrifiant (50) une pression de travail (p_{A}) telle que la viscosité du lubrifiant augmente au moins du double en raison de l'abaissement de température lors de l'expansion du brouillard de lubrifiant (50) dans la zone du corps de laminage.

11. Procédé selon la revendication 8 ou 10, **caractérisé en ce que** le corps de laminage (14) est sollicité avec un fluide sous pression de telle manière
- qu'il s'écoule tout autour du corps de laminage (14),
- que des particules de lubrifiant lubrifient le corps de laminage (14), et
- qu'une expansion du fluide sous pression lors de la sortie hors de l'outil de laminage mène à un abaissement de température de plus de 10 K, en particulier de plus de 20 K.

12. Procédé selon l'une des revendications 8 à 11, **caractérisé en ce que** le fluide sous pression présente à la sortie de l'outil de laminage (12) une température de moins de 15° C, en particulier de moins de 10° C.

13. Procédé selon l'une des revendications 8 à 12, **caractérisé en ce que** la pièce à oeuvrer est constituée, au moins au niveau de sa surface (22), d'un matériau qui, à la température à laquelle le fluide sous pression sort hors de l'outil de laminage (12), est déformable avec écrouissage à froid.

14. Procédé selon l'une des revendications 9 à 13, **caractérisé en ce que** le brouillard de lubrifiant (50)
- est constitué d'huile, ou
- contient à la fois des composants dépourvus d'huile et des composants contenant de l'huile.
